# EUROPÄISCHE PATENTANMELDUNG

(11) **EP 0 889 579 A2**
(43) Veröffentlichungstag der Anmeldung: **07.01.1999**
(21) Anmeldenummer: 98890189.8
(22) Anmeldetag: 30.06.1998
(51) Int. Cl.: H02P 1/44

(54) **Verfahren und Schaltung zum Steuern des Anlaufens eines einphasigen Asynchronmotors**

(30) Priorität: 03.07.1997 AT 1148/97
(71) Anmelder: ATB Austria Antriebstechnik Aktiengesellschaft, 8724 Spielberg (Steiermark) (AT)
(72) Erfinder: Reiter, Hannes, 8753 Fohnsdorf (AT); Karner, Wolfgang, 8740 Zeltweg (AT); Protas, Erich, Dipl.-Ing., 8700 Leoben (AT)
(74) Vertreter: Hehenberger, Reinhard, Dipl.-Ing.

(57) **Zusammenfassung**

Um das Anlaufverhalten eines an einem Einphasenwechselstromnetz betreibbaren Asynchronmotors mit einer Hauptphasenwicklung (1), einer Hilfsphasenwicklung (2) , sowie einem Betriebskondensator (3) zu verbessern, ist in Serie zur Hilfsphasenwicklung (2) ein Vorwiderstand (10) geschaltet, der mit Hilfe eines Schalters (11) überbrückt werden kann. Beim Anlaufen des Motors ist der Schalter (11) geöffnet, so daß das Anlaufmoment durch die erhöhte Impedanz im Erregerkreis der Hilfsphase (2) vergrößert wird. Nach dem Anlaufen des Motors wird der Schalter (11) geschlossen, so daß der Vorwiderstand (10) der Hilfsphasenwicklung (2) beim Betrieb des Motors überbrückt ist.

Um den dadurch erhöhten Anlaufstrom zu begrenzen, kann auch die Impedanz der Hauptphasenwicklung (1) zum Anlaufen des Motors erhöht werden. Hiezu kann in Serie zur Hauptphasenwicklung (1) ein Vorwiderstand (4) geschaltet sein, der mittels eines Schalters (5) überbrückbar ist. Beim Anlaufen des Motors wird der Schalter (5) geöffnet und im Betrieb des Motors, also nach dem Anlaufen, geschlossen, so daß der Vorwiderstand (4) überbrückt ist.

## Beschreibung

Die Erfindung betrifft ein Verfahren zum Steuern des Anlaufens eines einphasigen Asynchronmotors mit einer Hauptphasenwicklung, einer Hilfsphasenwicklung und einem zur Hilfsphasenwicklung in Serie geschalteten Betriebskondensator.

Die Erfindung betrifft weiters eine Anlauf schaltung für einen einphasigen Asynchronmotor mit einer Hauptphasenwicklung, einer Hilfsphasenwicklung und einem zur Hilfsphasenwicklung in Serie geschalteten Betriebskondensator.

Bei einer Vielzahl von Anwendungen wird von Elektromotoren ein hohes Anlauf- bzw. Losbrechmoment gefordert.

Der Erfindung liegt die Aufgabe zu Grunde, diese Forderung zu erfüllen. Diese Aufgabe wird erfindungsgemäß bei einem gattungsgemäßen Verfahren dadurch gelöst, daß die Impedanz im Erregerkreis der Hilfsphase beim Anlaufen des Motors erhöht wird.

Bevorzugte und vorteilhafte Ausführungsformen des erfindungsgemäßen Verfahrens sind Gegenstand der Verfahrensunteransprüche.

Eine Schaltung (Anlaufschaltung) der oben genannten Gattung, mit der das erfindungsgemäße Verfahren ausgeführt werden kann, ist gemäß der Erfindung dadurch gekennzeichnet, daß die Motorimpedanz in der Hilfsphase beim Anlaufen des Motors höher als im Betrieb ist.

Dies kann auf einfache Weise z.B. dadurch erfolgen, daß zur Hilfsphasenwicklung ein zuschaltbarer Widerstand in Serie geschaltet ist.

Durch das Erhöhen der Impedanz im Erregerkreis der Hilfsphase, z.B. durch den zu- und wegschaltbaren Widerstand in der Hilfsphasenwicklung kann das Anlaufmoment des Elektromotors auf sehr einfache und kostengünstige Weise verbessert (erhöht) werden.

In Weiterbildung der Erfindung kann dabei vorgesehen sein, daß parallel zum Widerstand ein Schalter vorgesehen ist, mit dem der Widerstand überbrückt werden kann.

In einer alternativen Ausführungsform kann vorgesehen sein, daß die Hilfsphasenwicklung aus wenigstens zwei Teilwicklungen besteht, die beim Einschalten (Anlaufen des Motors) in Serie geschaltet sind, wogegen sie in Betrieb parallel geschaltet sind. Bei dieser Ausführungsform wird die Gesamtimpedanz der Hilfsphase nicht durch einen zusätzlichen Vorwiderstand erhöht, sondern die einzelnen Teilwicklungen der Hilfsphasenwicklung werden beim Einschalten des Motors, also in der Anlaufphase, in Serie und nach dem Anlaufen parallel zueinander geschaltet.

In einer weiteren Ausführungsform kann vorgesehen sein, daß die Hilfsphasenwicklung aus wenigstens zwei parallelen Teilwicklungen besteht, von denen beim Einschalten wenigstens eine Teilwicklung weggeschaltet ist.

Durch die Erhöhung der Impedanz der Hilfsphase können beim Anlaufen durch Stromspitzen des Motors Netzeinbrüche verursacht werden. Die Hersteller elektrischer Motoren sind aber zunehmend bestrebt, durch Motorenanläufe hervorgerufene Netzeinbrüche, verursacht durch die Stromspitzen des Motors, zu begrenzen, was auch für Asynchronmotoren zutrifft, die am Einphasenwechselstromnetz betrieben werden.

In Weiterbildung der Erfindung kann daher vorgesehen sein, daß die Impedanz in der Hauptphase beim Anlaufen des Motors höher als im Betrieb ist. Durch die Erhöhung der Impedanz in der Hauptphase des Motors werden die Einschaltströme auf einfache Weise wirksam begrenzt, allerdings wird das Anlaufmoment etwas verschlechtert.

Bei geeigneter Abstimmung der Impedanzerhöhungen in der Hauptphase und in der Hilfsphase kann aber ein hohes Anlaufmoment ohne unzulässig hohe Netzeinbrüche während der Anlaufphase erzielt werden.

Nachfolgend werden Ausführungsbeispiele des Verfahrens und der Schaltung der Erfindung mit Bezug auf die beiliegenden Zeichnungen beispielhaft näher erläutert. Es zeigt:
Fig. 1 eine erste Ausführungsform einer erfindungsgemäßen Schaltung, die
Fig. 2a und 2b eine zweite Ausführungsform,
Fig. 3 eine dritte Ausführungsform der Erfindung, die
Fig. 4 bis 6 drei weitere, bevorzugte Ausführungsformen der erfindungsgemäßen Schaltung,
Fig. 7 ein Beispiel für eine Schaltung, bei der die Impedanz der Hauptphase und die der Hilfsphase verändert werden kann, und
Fig. 8 eine Schaltung, bei der die Impedanz der Hilfsphase verändert werden kann.

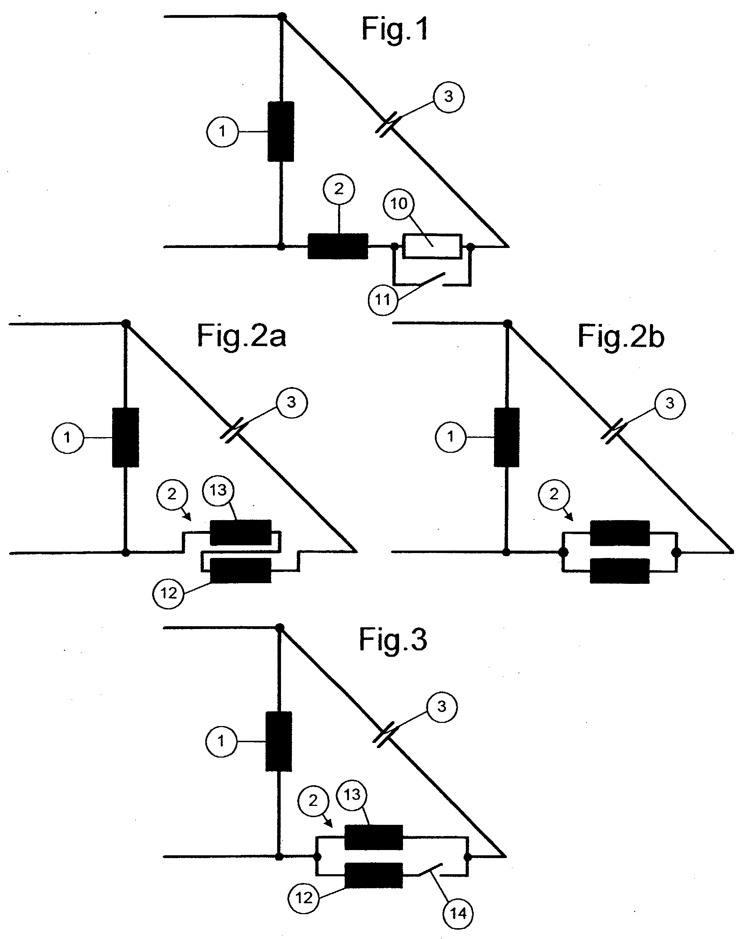

In Fig. 1 ist schematisch eine Schaltung eines an einem Einphasenwechselstromnetz betreibbaren Asynchronmotors dargestellt, bei der eine Hauptphasenwicklung 1, eine Hilfsphasenwicklung 2 und ein Betriebskondensator 3 an Netzanschlüsse L und N angeschlossen sind. Die Hilfsphasenwicklung 2 und der Betriebskondensator 3 sind zueinander in Serie und parallel zur Hauptphasenwicklung 1 geschaltet.

Zur Erhöhung der Impedanz der Hilfsphase und des Drehmomentes des Motors ist bei der Ausführungsform nach Fig. 1 in Serie zur Hilfsphasenwicklung 2 ein Vorwiderstand 10 geschaltet, der mit Hilfe eines Schalters 11 überbrückt werden kann. Beim Einschalten des Motors, also in seiner Anlaufphase, wird der Schalter 11 geöffnet und nach dem Anlaufen wieder geschlossen, so daß der Vorwiderstand 10 überbrückt ist. Auf diese Weise kann das Drehmoment des Motors in der Anlaufphase auf einfache Weise erhöht werden.

In den Fig. 2a und 2b ist eine Ausführungsform der erfindungsgemäßen Schaltung dargestellt, bei der die Hilfsphasenwicklung 2 aus zwei Teilwicklungen 12 und 13 besteht. Es können auch mehr als zwei Teilwicklungen 12 und 13 vorgesehen sein, welche die Hilfsphasenwicklung 2 bilden.

Wie in Fig. 2a dargestellt, sind die Teilwicklungen 12 und 13 in der Anlaufphase in Serie geschaltet, so daß die summierten Impedanzen der Teilwicklungen 12 und 13 praktisch die gleiche Aufgabe wie ein Vorwiderstand erfüllen. Beim Betrieb des Motors nach dem Anlaufen sind die Teilwicklungen 12 und 13 der Hilfsphasenwicklung 2 parallel geschaltet, wie dies in Fig. 2b gezeigt ist. Die errechnete Momenterhöhung in der Anlaufphase entspricht bei dieser Schaltung etwa derjenigen, die bei einer Verdoppelung der Kapazität des Kondensators 3 zu erzielen wäre.

Sind in einer Ausführungsform mehr als zwei Teilwicklungen 12 und 13 vorgesehen, dann können diese während des Anlaufens des Motors einer nach der anderen parallel geschaltet werden, so daß eine sehr gute Steuerung von Strom und Spannung bzw. Drehmoment während der Anlaufphase des Motors möglich ist.

Bei der in Fig. 3 gezeigten Ausführungsform einer erfindungsgemäßen Schaltung besteht die Hilfsphasenwicklung 2 aus zwei Teilwicklungen 12 und 13. In der Anlaufphase wird eine der beiden Wicklungen 12 und 13 - im Ausführungsbeispiel die Teilwicklung 12 - mit Hilfe eines Schalters 14 weggeschaltet, wie dies in Fig. 3 gezeigt ist. Nach dem Anlaufen des Motors wird der Schalter 14 geschlossen, so daß die Wicklung 12 bei Betrieb des Motors zugeschaltet ist. Wenn bei der in Fig. 3 gezeigten Ausführungsform mehr als zwei Teilwicklungen 12 und 13 vorgesehen sind, dann können alle Teilwicklungen bis auf die erste Teilwicklung über Schalter, die entsprechend dem Schalter 14 angeordnet sind, in der Anlaufphase weggeschaltet und während des Hochlaufens des Motors eine der nach anderen zugeschaltet werden.

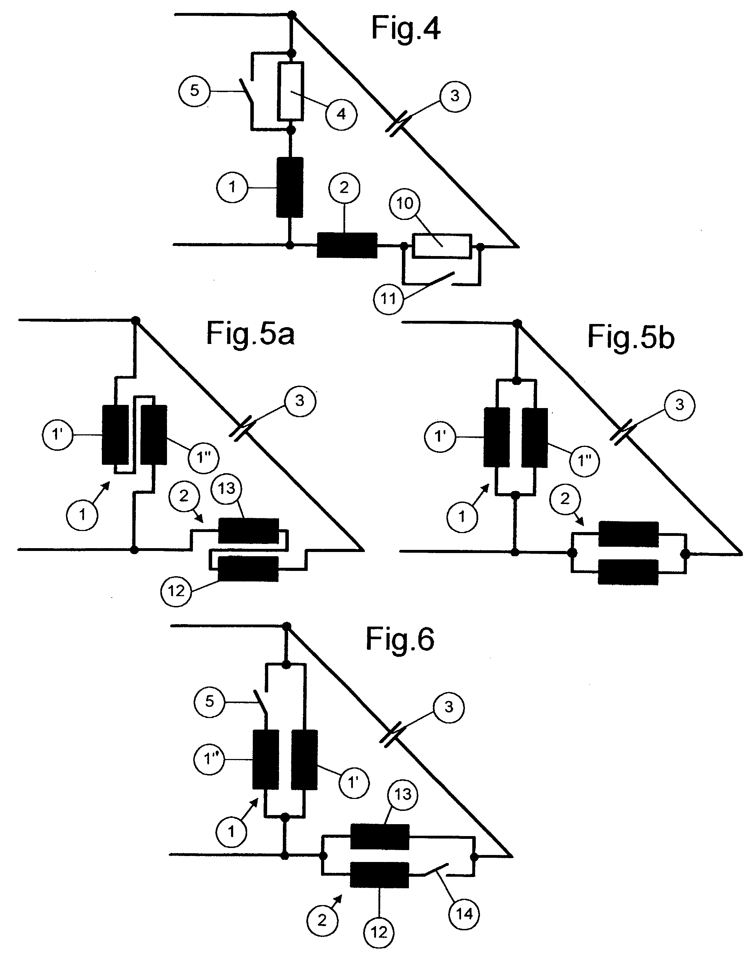

Bei den in den Fig. 4 bis 6 gezeigten Ausführungsformen ist dargestellt, daß die Motorimpedanz beim Hochlaufen (Anlaufen) des Motors auch in der Hauptphase 1 erhöht werden kann, um den Motorstrom zu begrenzen. Dabei sind in den Fig. 4 bis 6 Schaltbeispiele gezeigt, wie sie im Zusammenhang mit den Ausführungsbeispielen für die erfindungsgemäße Hilfsphasenwicklung verwendet werden können.

So ist bei der in Fig. 4 gezeigten Ausführungsform zur Einschaltstrombegrenzung in Serie zur Hauptphasenwicklung 1 ein Vorwiderstand 4 geschaltet, der mit Hilfe eines Schalters 5 überbrückt werden kann. Der Schalter 5 ist beim Einschalten des Motors geöffnet und wird nach dem Anlaufen des Motors (also nach der Anlaufphase) geschlossen, so daß der Vorwiderstand 4 überbrückt ist.

Auf diese Weise kann der Anlaufstrom durch Maßnahmen in der Hauptphase 1 auf einfache Weise begrenzt und ein Spannungseinbruch im Netz verhindert werden, ohne daß dank der Maßnahmen in der Hilfsphase 2, das Drehmoment des Motors während der Anlaufphase verschlechtert wird.

In den Fig. 5a und 5b ist eine Ausführungsform einer erfindungsgemäßen Schaltung dargestellt, bei der die Hauptphasenwicklung 1 von wenigstens zwei Teilwicklungen 1' und 1" gebildet ist.

Wie in Fig. 5a dargestellt ist, sind die Teilwicklungen 1' und 1" in der Anlaufphase in Serie geschaltet, wobei die summierten Impedanzen der Teilwicklungen 1' und 1" praktisch die gleiche Aufgabe wie ein Vorwiderstand erfüllen. Nach dem Anlaufen des Motors werden die Teilwicklungen 1' und 1" parallel geschaltet, wie Fig. 5b zeigt. Sind mehr als zwei Teilwicklungen 1' und 1" vorgesehen, dann können diese während des Anlaufens des Motors nacheinander parallel geschaltet werden, was eine sehr gute Steuerung von Strom und Spannung während der Anlaufphase des Motors ermöglicht.

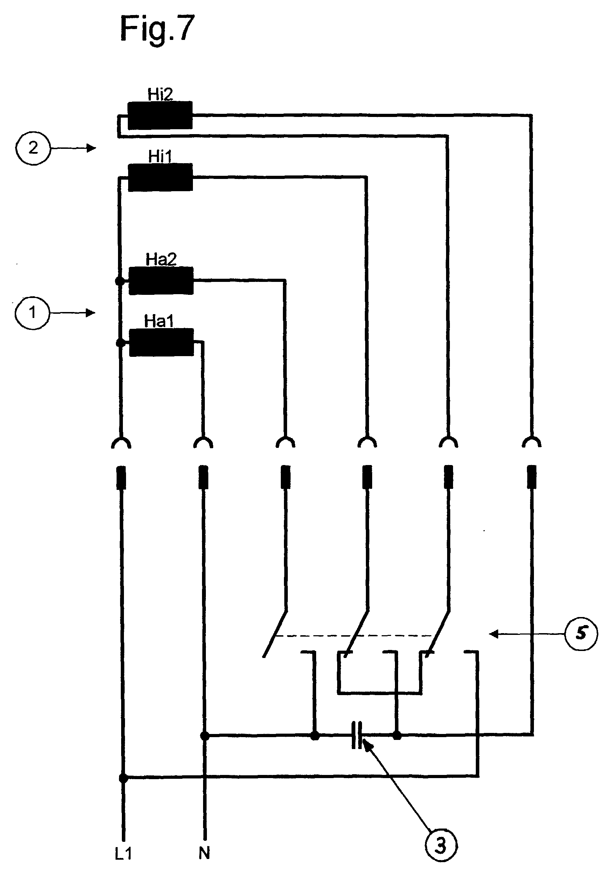

In Fig. 6 ist eine Ausführungsform dargestellt, in der die Hauptphasenwicklung 1 durch zwei Teilwicklungen 1' und 1" gebildet ist. Auch hier können mehr als zwei Teilwicklungen vorgesehen sein. In der Anlaufphase wird die Teilwicklung 1' mit Hilfe eines Schalters 5 weggeschaltet, wie in Fig. 6 zu sehen ist.

Wenn mehr als zwei Teilwicklungen 1' und 1" vorgesehen sind, dann können in der Anlaufphase alle Teilwicklungen 1" bis auf die erste Teilwicklung 1' über Schalter 5 weggeschaltet und während des Hochlaufens (Anlaufphase) des Motors eine nach der anderen zugeschaltet werden.

Die Fig. 7 zeigt ein Beispiel für eine erfindungsgemäße Schaltung, bei welcher der Hilfswicklung Hi1 eine Wicklung Hi2 zugeordnet ist. Ebenso ist der Hauptwicklung Hal eine zusätzliche Wicklung Ha2 zugeordnet.

In der Anlaufphase wird nur eine Teilwicklung Hal der Hauptphase bestromt, und die Teilwicklungen Hi1 und Hi2 der Hilfsphase werden in Serie geschaltet, so daß sich die Impedanzen der Wicklungen Hi1 und Hi2 addieren. Nach dem Anlaufen, also bei Betrieb des Motors, wird der Schalter S umgeschaltet, und damit die Teilwicklungen Hi1 und Hi2 sowie Ha1 und Ha2 parallel geschaltet. Durch diese Schaltung beim Anlaufen des Motors wird das Anlaufmoment erhöht, also verbessert, ohne daß (durch die Begrenzung des Einschaltstromes in der Hauptphase) dadurch unerwünschte Netzeinbrüche verursacht werden.

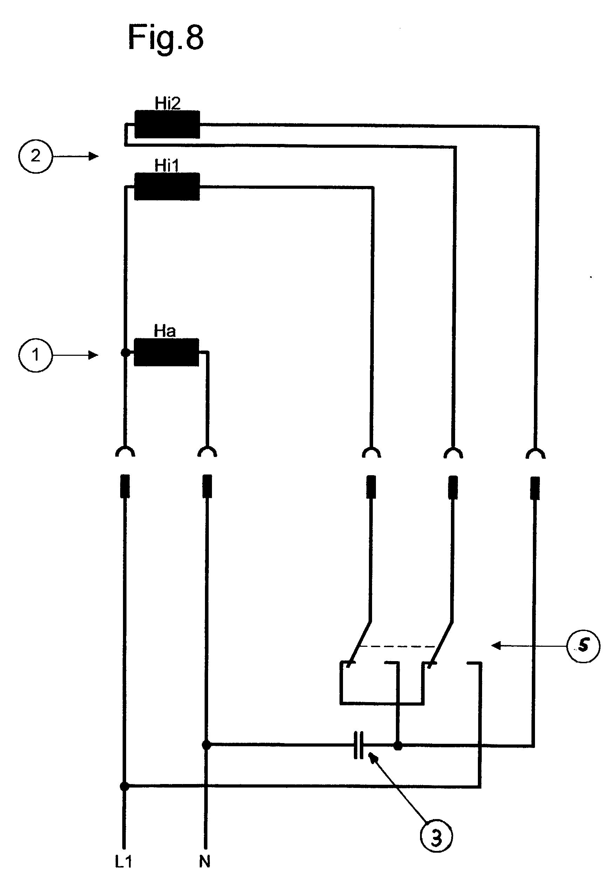

Fig. 8 zeigt ein Ausführungsbeispiel der erfindungsgemäßen Schaltung, bei der lediglich der Hilfsphasenwicklung Hi1 eine zusätzliche Wicklung Hi2 zugeordnet ist, die in der Anlaufphase in Serie zur Hilfsphasenwicklung Hi1 geschaltet werden kann. Durch das Umschalten der Teilwicklung Hi2 im Hilfsstrang auf Serienschaltung wird das Anlaufmoment des Motors beträchtlich erhöht, also verbessert. Die errechnete Momentenerhöhung in der Anlaufphase entspricht etwa derjenigen, wie sie bei einer Verdopplung der Kapazität des Anlaufkondensators 3 zu erzielen wäre.

Die in den Fig. 1 bis 8 dargestellten verschiedenen Schaltungsmöglichkeiten zum Ändern der Impedanz der Hilfsphase 2 und ggf. zusätzlich der Hauptphase 1 können miteinander beliebig kombiniert sein. Es ist also nicht wesentlich, daß die konkret in einer Fig. dargestellte Ausführungsform der Hauptphase 1 mit der in derselben Fig. konkret dargestellten Ausführungsform der Hilfsphase 2 übereinstimmt. So ist es beispielsweise möglich, die in Fig. 4 gezeigte Ausführungsform der Hauptphase 1 mit einer Ausführungsform der Hilfsphase 2 gemäß Fig. 2 oder gemäß Fig. 3 zu kombinieren.

Ein bevorzugtes Ausführungsbeispiel der Erfindung kann wie folgt beschrieben werden:

Um das Anlaufverhalten eines an einem Einphasenwechselstromnetz betreibbaren Asynchronmotors mit einer Hauptphasenwicklung 1, einer Hilfsphasenwicklung 2, sowie einem Betriebskondensator 3 zu verbessern, ist in Serie zur Hilfsphasenwicklung 2 ein Vorwiderstand 10 geschaltet, der mit Hilfe eines Schalters 11 überbrückt werden kann. Beim Anlaufen des Motors ist der Schalter 11 geöffnet, so daß das Anlaufmoment durch die erhöhte Impedanz im Erregerkreis der Hilfsphase 2 vergrößert wird. Nach dem Anlaufen des Motors wird der Schalter 11 geschlossen, so daß der Vorwiderstand 10 der Hilfsphasenwicklung 2 beim Betrieb des Motors überbrückt ist.

Um den dadurch erhöhten Einschaltstrom zu begrenzen, kann auch die Impedanz der Hauptphasenwicklung 1 zum Anlaufen des Motors erhöht werden. Hiezu kann in Serie zur Hauptphasenwicklung 1 ein Vorwiderstand 4 geschaltet sein, der mittels eines Schalters 5 überbrückbar ist. Beim Anlaufen des Motors wird der Schalter 5 geöffnet und im Betrieb des Motors, also nach dem Anlaufen, geschlossen, so daß der Vorwiderstand 4 überbrückt ist.

## Patentansprüche

1. Verfahren zum Steuern des Anlaufens eines einphasigen Asynchronmotors mit einer Hauptphasenwicklung (1), einer Hilfsphasenwicklung (2) und einem zur Hilfsphasenwicklung in Serie geschalteten Betriebskondensator (3), dadurch gekennzeichnet, daß die Impedanz im Erregerkreis der Hilfsphase (2) beim Anlaufen des Motors erhöht wird.

2. Verfahren nach Anspruch 1, dadurch gekennzeichnet, daß die Impedanz im Erregerkreis der Hilfsphase (2) nach der Anlaufphase wieder verkleinert.

3. Verfahren nach Anspruch 1 oder 2, dadurch gekennzeichnet, daß die Impedanz der Hilfsphase (2) von einem höchsten Wert am Beginn des Anlaufens während des Anlaufens nach und nach auf niedrigere Werte verkleinert wird.

4. Verfahren nach Anspruch 3, dadurch gekennzeichnet, daß die Impedanz der Hilfsphase (2) stufenweise verkleinert wird.

5. Verfahren nach einem der Ansprüche 1 bis 4, dadurch gekennzeichnet, daß die Impedanz im Erregerkreis der Hauptphase (1) beim Anlaufen des Motors erhöht wird.

6. Verfahren nach Anspruch 5, dadurch gekennzeichnet, daß die Impedanz der Hauptphase (1) von einem höchsten Wert am Beginn des Anlaufens während des Anlaufens nach und nach auf niedrigere Werte verkleinert wird.

7. Verfahren nach Anspruch 6, dadurch gekennzeichnet, daß die Impedanz der Hauptphase (1) stufenweise verkleinert wird.

8. Anlaufschaltung für einen einphasigen Asynchronmotor mit einer Hauptphasenwicklung (1), einer Hilfsphasenwicklung (2) und einem zur Hilfsphasenwicklung (2) in Serie geschalteten Betriebskondensator (3), insbesondere zum Ausführen des Verfahrens nach einem der Ansprüche 1 bis 7, dadurch gekennzeichnet, daß die Motorimpedanz in der Hilfsphase(2) beim Anlaufen des Motors höher als im Betrieb ist.

9. Schaltung nach Anspruch 8, dadurch gekennzeichnet, daß zur Hilfsphasenwicklung (2) ein zuschaltbarer Widerstand (10) in Serie geschaltet ist (Fig. 1, 4).

10. Schaltung nach Anspruch 9, dadurch gekennzeichnet, daß parallel zum Widerstand (10) ein Schalter (11) vorgesehen ist, mit dem der Widerstand (10) überbrückbar ist (Fig. 1, 4).

11. Schaltung nach Anspruch 8, dadurch gekennzeichnet, daß die Hilfsphasenwicklung (2) aus wenigstens zwei Teilwicklungen (12, 13, Hil, Hi2) besteht, die während des Anlaufens des Motors in Serie und während des Betriebes des Motors parallel geschaltet sind (Fig. 2a, 2b, 5a, 5b, 7, 8).

12. Schaltung nach Anspruch 8, dadurch gekennzeichnet, daß die Hilfsphasenwicklung (2) aus wenigstens zwei parallel geschalteten Teilwicklungen (12, 13) besteht, von denen während des Anlaufens des Motors wenigstens eine Teilwicklung (12) weggeschaltet ist (Fig. 3, 6).

13. Schaltung nach Anspruch 12, dadurch gekennzeichnet, daß in Serie zur wegschaltbaren Teilwicklung (12) ein Schalter (14) vorgesehen ist (Fig. 3, 6).

14. Schaltung nach einem der Ansprüche 8 bis 13, dadurch gekennzeichnet, daß die Impedanz in der Hauptphase (1) beim Anlaufen des Motors höher als im Betrieb ist.

15. Schaltung nach Anspruch 14, dadurch gekennzeichnet, daß in Serie zur Hauptphasenwicklung (1) ein zuschaltbarer Widerstand (4) geschaltet ist (Fig. 4).

16. Schaltung nach Anspruch 15, dadurch gekennzeichnet, daß parallel zum Widerstand (4) ein Schalter (5) vorgesehen ist (Fig. 4).

17. Schaltung nach Anspruch 14, dadurch gekennzeichnet, daß die Hauptphasenwicklung (1) aus wenigstens zwei Teilwicklungen (1', 1") besteht, die beim Einschalten in Serie und bei Betrieb des Motors parallel geschaltet sind (Fig. 5a, 5b).

18. Schaltung nach Anspruch 14, dadurch gekennzeichnet, daß die Hauptphasenwicklung (1) aus wenigstens zwei parallel geschalteten Teilwicklungen (1', 1"; Hal, Ha2) besteht, von denen beim Hochlauf des Motors wenigstens eine Teilwicklung (1"; Ha2) weggeschaltet ist (Fig. 6, 7).

19. Schaltung nach Anspruch 18, dadurch gekennzeichnet, daß in Serie zur wegschaltbaren Teilwicklung (1"; Ha2) ein Schalter (5, S) vorgesehen ist (Fig. 6).
